Europäisches Patentamt

European Patent Office

Office européen des brevets

(11) Veröffentlichungsnummer: **0 338 101**
**A1**

## EUROPÄISCHE PATENTANMELDUNG

(21) Anmeldenummer: 88106169.1

(22) Anmeldetag: 19.04.88

(51) Int. Cl.4: **H01R 13/66** , **G01L 9/00** , **G01L 19/00** , **G01K 13/02**

(43) Veröffentlichungstag der Anmeldung:
25.10.89 Patentblatt 89/43

(84) Benannte Vertragsstaaten:
**AT CH DE GB LI**

(71) Anmelder: **Kistler Instrumente AG**
**Eulachstrasse 22**
**CH-8408 Winterthur(CH)**

(72) Erfinder: **Märki, Balz**
**Oberfeldstrasse 46**
**CH-8408 Winterthur(CH)**
Erfinder: **Engeler, Paul**
**Allmendstrasse 13**
**CH-8500 Frauenfeld(CH)**
Erfinder: **Wolfer, Peter**
**Alte Steinerstrasse 9**
**CH-8450 Kleinandelfingen(CH)**

(74) Vertreter: **Schmidt, Horst, Dr.**
**Siegfriedstrasse 8**
**D-8000 München 40(DE)**

(54) **Aufnehmer-Steckverbindung.**

(57) Eine Aufnehmer-Steckverbindung zum Anschluß an elektromechanische Aufnehmer zur Messung mechanischer Größen umfaßt ein oder mehrere darin zum Wärmeaustausch mit einem in thermischem Kontakt mit dem Medium stehenden Bereich des Aufnehmers (2) integrierte Temperaturmeßelemente (11) zur zusätzlichen Erfassung der Temperatur des Mediums. Die Temperaturmeßelemente (11) sind vorzugsweise an einem Kupplungszwischenstück in Gestalt einer Überwurfmutter (5) zur Verbindung eines Steckers (6) mit einem aufnehmerseitigen Anschlußnippel (3) vorgesehen. Eine Hülse (12) dient zur Fixierung der Temperaturmeßelemente (11) gegenüber der Überwurfmutter. Die Erfindung ermöglicht eine Integration von Temperaturmeßelementen in eine Steckverbindung unter Einhaltung von Standardeinbaumaßen und eine Nachrüstung bestehender Anlagen mit Aufnehmern, insbesondere miniaturisierten Aufnehmern, zur zusätzlichen Temperaturmessung des Mediums. Die Steckverbindung findet hauptsächlich Anwendung beim Spritzgießen von Kunststoffen in Spritzgießmaschinen.

Fig. 2

## Aufnehmer-Steckverbindung

Die Erfindung betrifft eine Aufnehmer-Steckverbindung zum Anschluß an Aufnehmer zur Messung mechanischer Größen, z.B. Druck-, Kraft- oder Beschleunigungsaufnehmer.

Meßwertaufnehmer, die außer ein oder mehreren mechanischen Hauptmeßgrößen, wie z.B. dem Druck, auch die Temperatur des Mediums messen können, dem der Aufnehmer ausgesetzt ist, sind bekannt. Die Aufnehmer, die z.B. piezoelektrische oder piezoresistive Wandlerelemente enthalten können, sind zumeist über Mehrpolstecker und dazu passende Kabel mit einer elektrischen Signalauswertung verbunden. Diese Art der Steckverbindung ist voluminös und aufwendig und daher insbesondere für miniaturisierte Meßwertaufnehmer ungeeignet. Die beispielsweise aus einer Druckmessung stammenden elektrischen Signale werden bei solchen Aufnehmern zumeist über einen Koaxialstecker abgeführt.

Der Erfindung liegt die Aufgabe zugrunde, eine insbesondere für miniaturisierte Druck-, Kraft-, oder Beschleunigungsaufnehmer geeignete Erfassung der Temperatur des zu messenden Mediums sowie Abführung der sich aus der Messung der mechanischen Größen und der Temperatur ergebenden Signale zu schaffen.

Diese Aufgabe wird erfindungsgemäß durch wenigstens ein in der an den Aufnehmer anschließbaren Steckverbindung zum Wärmeaustausch mit einem in thermischem Kontakt mit dem Medium stehenden Bereich des Aufnehmers integriertes Temperaturmeßelement gelöst. Der Aufnehmer braucht mithin nicht mit einem gesonderten Meßelement ausgestattet zu werden, um zusätzlich zu den mechanischen Größe auch die Temperatur des Mediums, dem der Aufnehmer ausgesetzt ist, zu ermitteln. Das Temperaturmeßelement kann im Stecker selbst integriert sein. Vorzugsweise ist es jedoch gemäß einer Weiterbildung der Erfindung an einem mit einem Anschlußnippel am Aufnehmer in Eingriff bringbaren Kupplungszwischenstück zur Fixierung des Steckers vorgesehen. Beim Kupplungszwischenstück kann es sich um eine Überwurfmutter oder ein Bajonettkupplungsteil handeln. Das Temperaturmeßelement ist vorzugsweise an dem betreffenden Tragteil, z.B. dem Kupplungszwischenstück so angeordnet, daß es in direkter berührender Eingriffnahme mit dem Aufnehmerbereich steht, wenn die elektrische Steckverbindung errichtet worden ist. Insbesondere kann die Anordnung so sein, daß die Meßspitze des Temperaturmeßelementes, bei dem es sich vorzugsweise um ein Thermoelement handelt, gegen den Aufnehmerbereich gepreßt wird. Die Steckverbindung als integriertes Bauteil kann Standardeinbaumaße haben. Bezüglich anderer Weiterbildungen der Erfindung wird auf die Patentansprüche verwiesen.

Die Erfindung wird nachfolgend anhand einer bevorzugten Ausführungsform und der Zeichnung näher erläutert. Es zeigen:

Fig. 1 in teilweise geschnittener Ansicht einen Aufnehmer mit einer herkömmlichen Steckverbindung zur Signalableitung,

Fig. 2 eine Ansicht ähnlich Fig. 1 mit einer Steckverbindung nach der Erfindung zur gleichzeitigen Ableitung der Signale aus der Messung mechanischer Größen und zur Temperaturmessung des Mediums,

Fig. 3 die Steckverbindung nach der Erfindung in Gesamtansicht,

Fig. 4 eine Endansicht der Steckverbindung nach der Er findung, und

Fig. 5 ein Diagramm zur Darstellung des Verlaufes der Temperatur über der Zeit bei Messung an unterschiedlichen Aufnehmerbereichen.

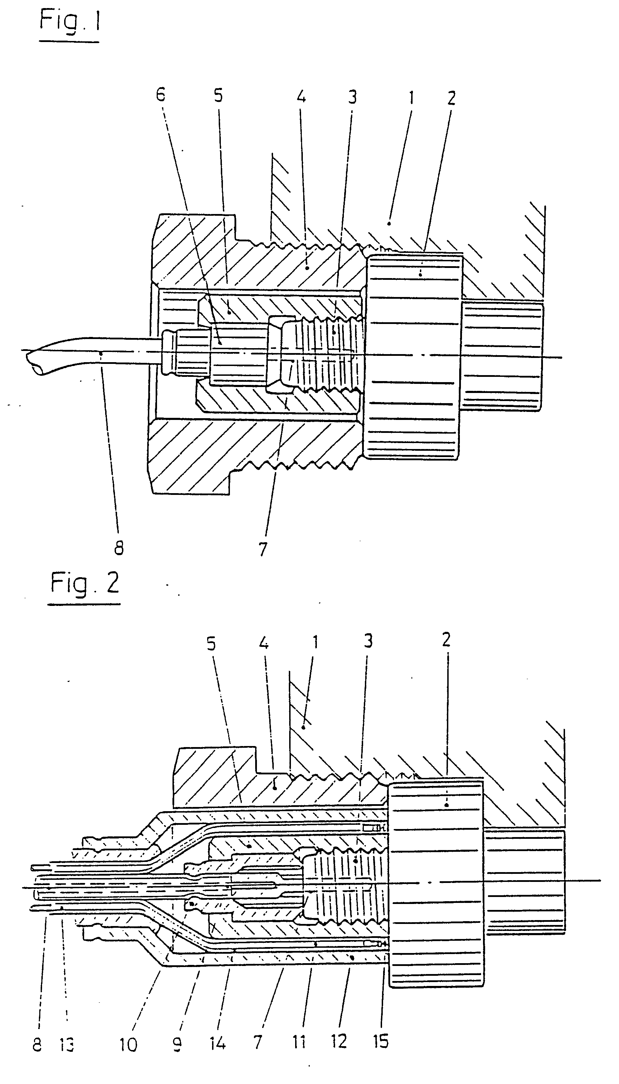

Fig. 1 zeigt einen herkömmlichen Druckaufnehmer 2, der in ein Bauteilgehäuse 1, z.B. eine Spritzgießform, eingebaut sein kann. Bündig zum Gehäuse liegt eine nicht bezifferte Membran in Kontakt mit dem Medium, dessen Druck zu messen ist. Ein Koaxialkabel 8 hat einen Stecker 6, der mittels einer Überwurfmutter 5 auf einen mit einem Schraubgewinde versehenen Aufnehmeranschlußnippel 3 aufgeschraubt ist, so daß ein Stift 7 des Steckers 6 in elektrische Verbindung mit einem Pol (z.B. dem positiven Pol) des Aufnehmers 2 gelangt. Der andere Pol des Aufnehmers ist über eine elektrisch leitende Überwurfmutter 5 und eine in Fig. 2 gezeigte Kontaktklemme 10 mit dem äußeren geerdeten Leiter des Koaxialkabels 8 verbunden. Der Aufnehmer 2, der, wie dargestellt, in einer zweistufigen Bohrung des Gehäuses 1 aufgenommen sein kann, wird durch eine Montagehohlschraube 4 über ein nicht gezeigtes Gewinde in der Bohrung der Spritzgießform eingespannt. Die in Fig. 1 gezeigte Anordnung schafft eine sichere elektrische und mechanische Verbindung zwischen Aufnehmer 2 und Koaxialkabel 8. Beim Aufnehmer kann es sich um einen Druck-, Kraft- oder Beschleunigungsaufnehmer handeln, dargestellt ist ein solcher für die Druckmessung.

Wie erwähnt, ist es in vielen Fällen erwünscht, außer einer mechanischen Größe, wie dem Druck-, der Kraft oder der Beschleunigung, auch die Temperatur des zu messenden Mediums zu ermitteln. Eine bevorzugte Ausführungsform einer Steckverbindung nach der Erfindung, die eine zusätzliche Temperaturmessung erlaubt, ist in Fig. 2 dargestellt. In Fig. 2 tragen gleiche oder ähnliche Teile wie in Fig. 1 gleiche Bezugszei chen. Bei der Steckverbindung nach Fig. 2 ist außer dem Stecker 6 auch die Kontaktklemme 10 sichtbar, welche das Koaxialkabel 8 hülsenförmig umgibt und gegenüber dem Stecker 6 fixiert. Ein Signaldraht im Koaxialkabel ist mit dem Steckerstift 7 elektrisch und mechanisch verbunden. Die Überwurfmutter 5 drückt den Steckerstift 7 über die Kontaktklemme 10 in die gestrichelt angedeutete Steckbuchse des Aufnehmeranschlußnippels 3, wenn die Überwurfmutter 5 auf den Anschlußnippel 3 voll aufgeschraubt ist. Dargestellt ist in Fig. 2 eine erfindungsgemäße Integration von ein oder mehreren Temperaturßmeßelementen 11 in die Steckverbindung. Bei den Temperaturmeßelementen 11 kann es sich beispielsweise um Thermoelemente handeln, welche umfänglich der Überwurfmutter 5, z.B. in darin ausgebildeten axialen Rillen oder Nuten 14 angeordnet sein können. Die Temperaturmeßelemente 11 haben Signalableitungsdrähte, die zwischen der Kabelummantelung 13 und dem Koaxialkabel 16 nach außen geführt sind. Die temperaturempfindlichen Lötaugen der Temperaturmeßelemente 11 stehen über Abdichtungen 15 in gut wärmeübertragendem Kontakt mit einem Bereich des Aufnehmers 2, der in thermischem Kontakt mit dem Medium steht. Wie dargestellt, ist eine Hülse 12 über einen Bereich der Kabelummantelung 13 und über die Überwurfmutter 5 mit den darauf angeordneten Temperaturmeßelementen 11 gestülpt, wodurch diese gegenüber der Überwurfmutter 5 festgeklemmt werden, so daß eine insgesamt als Einheit integrierte Steckverbindung vorliegt.

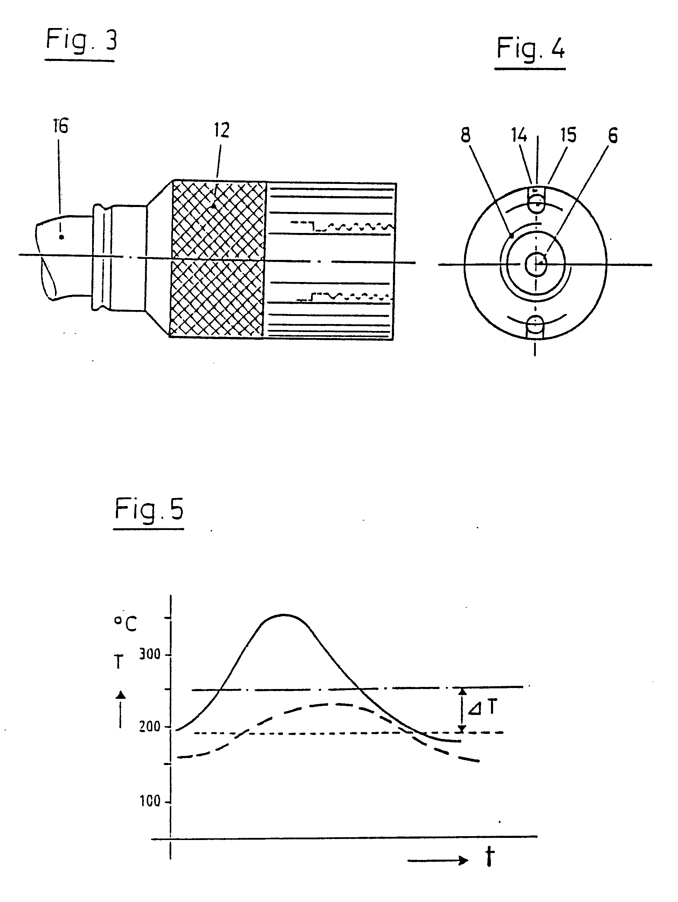

Fig. 3 und 4 zeigen die erfindungsgemäße Steckverbindung mit teilweise gerändelter Hülse 12 und dem das Koaxialkabel 8 und die elektrischen Leitungen für die Temperaturmeßelemente 11 und die Kabelummantelung 13 enthaltenden Spezialkabel 16 in Gesamt- und Seitenansicht. Die Steckverbindung nach der Erfindung gemäß Fig. 2-4 hat vorzugsweise die gleichen Außenabmessungen wie die standardisierte Steckverbindung nach Fig. 1, so daß beide Steckverbindungen zusammen mit herkömmlichen Montagehohlschrauben 4 und Aufnehmeranschlußnippeln 3 verwendet werden können. Ebenso ist die Überwurfmutter 5 für herkömmliche Aufnehmeranschlußnippel 3 verwendbar. Dies ermöglicht die einfache Nachrüstung eines bestehenden Aufnehmers, der nur für die Messung mechanischer Größen geeignet ist, zur zusätzlichen Erfassung der Temperatur des Mediums, indem auf den Aufnehmeranschluß eine Steckverbindung nach der Erfindung dergestalt aufgesetzt wird, daß die Temperaturmeßelemente mit einem in thermischem Kontakt mit dem Medium stehenden Aufnehmerbereich gelangen.

Fig. 5 zeigt schematisch den Temperaturgang an der Membran des Aufnehmers 2 und an einem Temperaturmeßelement 11 einer erfindungsgemäßen Steckverbindung während des Spritzgießens von Kunststoffen in einer Spritzgießmaschine. Die durch ausgezogene Linien wiedergegebene Kurve zeigt den Verlauf der Temperatur über der Zeit an der Membran des Aufnehmers und in deren unmittelbaren Umgebung im Medium. Die gestrichelte Kurve gibt den Temperaturverlauf wieder, wie er mit einer Steckverbindung nach der Erfindung ermittelt wird. Während des Einspritzvorganges steigt die Temperatur an der Membran zunächst an. Dann kühlt sich der flüssige Kunststoff ab und damit auch die Temperatur an der Membran. Das Temperaturmeßelement 11 der Steckverbindung nach der Erfindung folgt diesem Temperaturgang mit einer gewissen zeitlichen Verzögerung und mit geringerer Amplitude, weil der Aufnehmer 2 ein Dämpfungsglied für den Wärmeübergang darstellt. Die mittlere Temperatur der Membran (und deren Umgebung) ist in Fig. 5 strichpunktiert eingezeichnet. Die mittlere Temperatur, gemessen an einem Temperaturmeßelement 11 einer erfindungsgemäßen Steckverbindung ist gestrichelt wiedergegeben. Der Unterschied der mittleren Temperatur beträgt $\Delta T$ und kann durch eine Kalibrierung ermittelt werden.

Anstelle der Fixierung der Temperaturmeßelemente 11 in der in Fig. 2 gezeigten Weise an der Überwurfmutter der Steckverbindung kann auch eine andere geeignete Fixierung vorgesehen werden. Anstelle einer Überwurfmutter 5 kann auch ein Kupplungszwischenstück vorgesehen werden, das in Bajonettverbindung mit einem aufnehmerseitigen Anschlußteil treten kann. Ferner brauchen die Temperaturmeßelemente 11 nicht notwendigerweise an einem separaten Kupplungszwischenstück wie der Überwurfmutter angeordnet sein, sondern können, wenn erwünscht, auch direkt in geeigneter Weise in den Stecker 6 integriert sein.

Durch die Erfindung ist eine Steckverbindung für Aufnehmer geschaffen worden, die auf einfache Weise eine Neu- oder Nachrüstung von Meßanlagen mit Druck-, Kraft- oder Beschleunigungsaufnehmern zusätzlich für Temperaturmessung ermöglicht, was beispielsweise für eine Optimierung von Spritzgießvorgängen an Kunststoffspritzgießmaschinen erwünscht ist. Vorzugsweise ist die erfindungsgemäße Steckverbindung so gestaltet, daß die äußeren Abmessungen gegenüber einer herkömmlichen elektrischen Steckverbindung unverändert sind. Speziell für die Nachrüstung ist es auch vorteilhaft, wenn die Überwurfmutter so gestaltet ist, daß sie auf handelsübliche Aufnehmer aufgeschraubt werden kann.

## Ansprüche

1. Aufnehmer-Steckverbindung zum Anschluß an Aufnehmer zur Messung mechanischer Größen, gekennzeichnet durch wenigstens ein darin zum Wärmeaustausch mit einem in thermischem Kontakt mit dem Medium stehenden Bereich des Aufnehmers integriertes Temperaturmeßelement (11) zur Messung der Temperatur des Mediums.

2. Steckverbindung nach Anspruch 1, dadurch gekennzeichnet, daß das Temperaturmeßelement (11) an einem Kupplungszwischenstück (5) vorgesehen ist.

3. Steckverbindung nach Anspruch 2, dadurch gekennzeichnet, daß das Kupplungszwischenstück eine auf einem aufnehmerseitigen Anschlußnippel (3) aufschraubbare Überwurfmutter (5) ist.

4. Steckverbindung nach Anspruch 2, dadurch gekennzeichnet, daß das Kupplungszwischenstück (5) ein in bajonettartigem Eingriff mit einem aufnehmerseitigen Anschlußbereich bringbares Kupplungsteil ist.

5. Steckverbindung nach einem der vorhergehenden Ansprüche, dadurch gekennzeichnet, daß das Temperaturmeßelement (11) zur direkten berührenden Eingriffnahme mit dem Aufnehmerbereich angeordnet ist.

6. Steckverbindung nach einem der vorhergehenden Ansprüche, dadurch gekennzeichnet, daß diese Standardeinbaumaße hat.

7. Steckverbindung nach einem der vorhergehenden Ansprüche, dadurch gekennzeichnet, daß das Temperaturmeßelement (11) durch eine äußere Hülse (12) gegenüber dem betreffenden Tragteil, insbesondere dem Kupplungszwischenstück (5) fixiert ist.

8. Steckverbindung nach einem der vorhergehenden Ansprüche, gekennzeichnet durch ein Koaxialkabel (16) mit Signalleitungen für die mechanischen Größen und die Temperatur.

**Fig. 1**

**Fig. 2**

Fig. 3

16    12

Fig. 4

8   14   15   6

Fig. 5

°C
T   300

250

200

ΔT

100

t

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 205 789 (HYDROTECHNIK) <br> * Figur 1; Seite 4, Zeile 9 - Seite 7, Zeile 19 * <br> --- | 1-3, 5, | H 01 R 13/66 <br> G 01 L 9/00 <br> G 01 L 19/00 <br> G 01 K 13/02 |
| A | DE-A-3 215 372 (TECHNOMED) <br> * Figuren 1-3; Seite 4, Zeile 28 - Seite 5, Zeile 15 * <br> --- | 1, 2, 7 | |
| A | US-A-4 529 869 (EKSTROM) <br> * Figuren 16, 17; Spalte 8, Zeilen 19-60 * <br> ----- | 1, 2, 5 , 7 | |

| | | | RECHERCHIERTE SACHGEBIETE (Int. Cl.4) |
|---|---|---|---|
| | | | H 01 R 13/66 <br> G 01 L 9/00 <br> G 01 L 19/00 <br> G 01 K 1/00 <br> G 01 K 13/00 |

Der vorliegende Recherchenbericht wurde für alle Patentansprüche erstellt

| Recherchenort | Abschlußdatum der Recherche | Prüfer |
|---|---|---|
| BERLIN | 15-12-1988 | HAHN G |